# EUROPEAN PATENT APPLICATION

(11) **EP 1 752 948 A1**
(43) Date of publication of application: **14.02.2007**
(21) Application number: 05726662.9
(22) Date of filing: 15.03.2005
(51) Int. Cl.: G09B 29/00

(54) **MAP INFORMATION CREATING DEVICE, MAP INFORMATION CREATING METHOD, AND MAP INFORMATION CREATING PROGRAM**

(30) Priority: 31.03.2004 JP 2004108250; 28.12.2004 JP 2004381827
(71) Applicant: Pioneer Corporation, Tokyo 1538654 (JP); Pioneer System Technologies Corporation, Sendai-shi, Miyagi 9810912 (JP)
(72) Inventor: ADACHI, Hajime, Tsurugashima-shi, Saitama 3508555 (JP); MATSUMOTO, Reiji, Tsurugashima-shi, Saitama 3508555 (JP); KUMAGAI, Shunichi, Kawagoe-shi, Saitama 3508555 (JP); HIROSE, Takuya, Kawagoe-shi, Saitama 3508555 (JP); SUZUKI, Masayoshi, Kawagoe-shi, Saitama 3508555 (JP)
(74) Representative: Haley, Stephen
(86) International application number: PCT/JP2005/004493
(87) International publication number: WO 2005/098792

(57) **Abstract**

A 3D road object (303a) is an object having road width (W), height (H), and length (L). The 3D road object (303a) corresponds to a link (401). A road surface texture (501) is drawn repeatedly on the top surface of the 3D road object (303a). With a map information creating device, geometry data (310) in a cube shape containing a cross-section (S) including the road width (W) and the height (H) can be extracted. Length (1) of this geometry data (310) can be set to the length of one sheet (one cycle) of the road surface texture (501) in the length direction of the 3D road object (303a). The road surface texture (501) for one sheet as well as drawing cycle information P (P=L/1) can also be extracted. Moreover, link length information (length (L) of the link (401)) can be extracted from the link (401).

## Description

### TECHNICAL FIELD

The present invention relates to a map information creating device, a map information creating method, and a map information creating program. However, applications of the present invention are not limited to the map information creating device, the map information creating method, and the map information creating program stated above.

### BACKGROUND ART

Conventionally, there has been disclosed a three-dimensional (3D) model deformation operation device that, in a deformation operation of a 3D model of plant facilities, etc., carries out the reliable deformation operation without affecting a model geometry of an equipment that is not subjected to the deformation operation.

This 3D deformation operation device is provided with the 3D model, a constraint table in which cutting propriety conditions of each element of the 3D model are registered, a deformation condition input unit that inputs deformation conditions of the 3D model, and a deformation operation unit having an intersection checking function of carrying out an intersection checking of a cutting plane and the element input from the deformation condition input unit, using data of the 3D model and the constraint table, a cutting plane changing function of changing the cutting plane when it is determined that "it is the element with an intersection and cutting is not allowed" by the intersection checking function, and a deformation operation function being executed when it is determined that "it is the element with the intersection and cutting is allowed" or that "there is no intersection" by the intersection checking function, or after the plane is changed to a plane allowed to be cut by the cutting plane changing function (for example, see Patent Document 1 below).

Moreover, an element dividing method of efficiently executing an operation for dividing the 3D geometry of an object into hexahedron elements to shorten operation time has been disclosed. In this element dividing method, the 3D geometry of the object is first input as a geometrical data group combining plane elements divided into plural areas as seen transparently from a predetermined direction and their height data, and then a predetermined number of articulation points are provided in a boundary and/or outline of each area so that each area or an area inside the outline is divided into quadrangular elements by a group of parallel lines passing through the articulation points concerned. After grouping the quadrangular elements by the height data and imparting the same attribute to the quadrangular elements of the same group, the quadrangular element is then extended by a predetermined amount along its height direction in accordance with the attribute of each quadrangular element and divided by a predetermined division number in the height direction to create the hexahedron element. Finally, grouping of the groups of the hexahedron elements belonging to the respective areas is canceled to bring into one group of the hexahedron elements, so that a 3D FEM (finite element method) model is completed (for example, see Patent Document 2 below).

Patent Document 1: Japanese Patent Laid-Open Publication No. 2000-200296
Patent Document 2: Japanese Patent Laid-Open Publication No. H10-31759

### DISCLOSURE OF INVENTION

### PROBLEM TO BE SOLVED BY THE INVENTION

However, since the amount of data of 3D map information containing a 3D object is huge, the foregoing conventional techniques have a problem that, for example, it is insufficient for reducing the amount of data of the 3D map information and requires a large-capacity memory to be used.

Particularly in an on-vehicle or a portable navigation apparatus, because available memory capacity is limited, there is a problem that, for example, the 3D map information described above cannot be applied to such navigation apparatus.

On the other hand, if simple 3D map information is used, the 3D map information can be applied to the above navigation apparatus because the amount of data is not huge. However, there is a problem that, for example, the map information drawn becomes rough and a realistic image corresponding to the geometry of an actual road or the like can not be obtained. Particularly, a curve, a slope, or the like of the road cannot be drawn realistically, and there is a problem that, for example, a user cannot recognize it intuitively.

### MEANS FOR SOLVING PROBLEM

A map information creating device according to the invention of claim 1 includes a geometry data extracting unit that extracts geometry data from map information including a three-dimensional object indicating three-dimensional geometry configured by width, height, and length, the geometry data including a cross-section constituted of at least the width and the height of the three-dimensional object; and a creating unit that creates a three-dimensional object having geometry identical to that of the three-dimensional object based on the geometry data extracted by the geometry data extracting unit.

Moreover, a map information creating method according to the invention of claim 7 includes a geometry data extracting step of extracting geometry data from map information including a three-dimensional object indicating three-dimensional geometry configured by width, height, and length, the geometry data including a cross-section constituted of at least the width and the height of the three-dimensional object; and a creating step of creating a same geometry object having geometry identical to that of the three-dimensional object based on the geometry data extracted at the geometry data extraction step.

Furthermore, a map information creating program according to the invention of claim 8 causes a computer to execute the map information creating method according to claim 7.

### BRIEF DESCRIPTION OF DRAWINGS

[Fig. 1] Fig. 1 is a block diagram of a hardware configuration of a map information creating device according to an embodiment of the present invention;
[Fig. 2] Fig. 2 is a block diagram of a functional configuration of the map information creating device according to the embodiment of the present invention;
[Fig. 3] Fig. 3 is an explanatory diagram illustrating a part of map information stored in a map information database;
[Fig. 4] Fig. 4 is an explanatory diagram illustrating a part of road network data stored in a road network database;
[Fig. 5] Fig. 5 is an explanatory diagram illustrating a 3D road object as a target of extraction illustrated in Fig. 2;
[Fig. 6] Fig. 6 is an explanatory diagram illustrating extracted geometry data;
[Fig. 7] Fig. 7 is an explanatory diagram illustrating the 3D road object that inclines with respect to an XY plane representing a reference plane;
[Fig. 8] Fig. 8 is an explanatory diagram illustrating an example of a road surface texture drawn by a texture drawing unit;
[Fig. 9] Fig. 9 is an explanatory diagram illustrating a connecting state of the 3D objects connected to each other;
[Fig. 10] Fig. 10 is an explanatory diagram illustrating a generated complementary object;
[Fig. 11] Fig. 11 is a flowchart of a map information creating process according to a first embodiment;
[Fig. 12] Fig. 12 is a flowchart of a map information creating process according to a second embodiment;
[Fig. 13] Fig. 13 is a flowchart of a map information creating process according to a third embodiment;
[Fig. 14] Fig. 14 is a flowchart of a texture drawing process according to a fourth embodiment; and
[Fig. 15] Fig. 15 is a flowchart of a complement process according to a fifth embodiment.

### EXPLANATIONS OF LETTERS OR NUMERALS

- 200: map information creating device
- 201: map information DB
- 202: road network DB
- 204: link-length information extracting unit
- 206: creating unit
- 231: geometry data extracting unit
- 232: texture information extracting unit
- 261: geometry drawing unit
- 262: texture drawing unit
- 263: detection unit
- 310: geometry data
- S: cross-section

### BEST MODE(S) FOR CARRYING OUT THE INVENTION

### (Embodiment)

Exemplary embodiments of a map information creating device, a map information creating method, and a map information creating program according to embodiments of the present invention will be explained in detail below with reference to the accompanying drawings.

### (Hardware Configuration of Map information creating device)

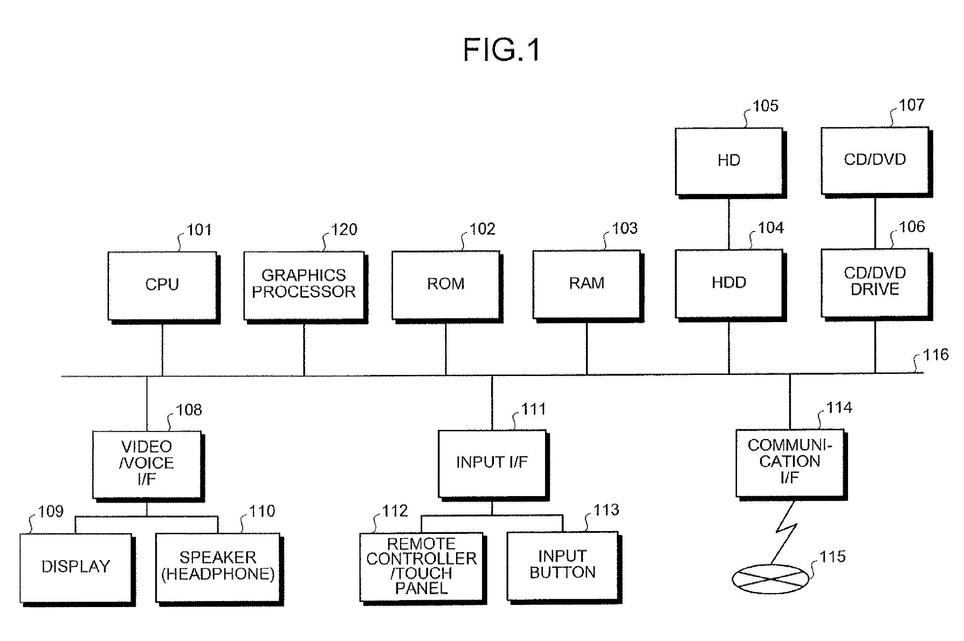

First, a hardware configuration of the map information creating device according to the embodiment of the present invention will be explained. Fig. 1 is a block diagram of the hardware configuration of the map information creating device according to the embodiment of the present invention. As shown in Fig. 1, the map information creating device includes a CPU 101, a graphics processor 120, a ROM 102, a RAM 103, an HDD (hard disk drive) 104, an HD (hard disk) 105, a CD/DVD drive 106, a CD/DVD 107 as an example of a removable recording medium, a video/voice I/F (interface) 108, a display 109, a speaker 110, an input I/F (interface) 111, a remote controller/touch panel 112, an input button 113, and a communication I/F (interface) 114 connected to a network 115. The respective components 101 through 114 and 120 are connected through a bus 116 with each other.

The CPU 101 performs an overall control of the map information creating device. The graphics processor 120 controls drawing and displaying of map information. The ROM 102 stores a program such as a boot program. It may also be used as the recording medium of data. The RAM 103 is used as a work area of the CPU 101 and the graphics processor 120. It may also be used as the recording medium of the data. The HDD 104 controls reading/writing of the data from/to the HD 105 in accordance with the control by the CPU 101. The HD 105 stores the data written in by the control by the HDD 104.

The CD/DVD drive 106 controls the reading/writing of the data from/to the CD/DVD 107 in accordance with the control by the CPU 101. The CD/DVD 107 is the removable recording medium from which the recorded data is read out in accordance with the control by the CD/DVD drive 106. A writable recording medium can also be used as the CD/DVD 107. The removable recording medium may be, besides the CD/DVD 107, a CD-ROM (CD-R, CD-RW), a DVD-ROM (DVD-R, DVD±RW, DVD-RAM), an MO, a memory card, or the like.

The video/voice I/F (interface) 108 is connected to the display 109 for video displays and the speaker 110 (or a headphone) for voice outputs. On the display 109, the various data including a cursor, an icon, a menu, a window, or a toolbox, as well as a character and an image, is displayed. As the display 109, a CRT, a TFT liquid crystal display, a plasma display, or the like can be employed, for example. Voice is output from the speaker 110.

The input I/F 111 inputs the data transmitted from the remote controller/touch panel 112 or the input button 113 provided with a plurality of keys for inputting such as the character, a numeric value, or various instructions.

The communication I/F 114 is connected to the network 115 such as the Internet or the like wirelessly or through a communication line, and connected to other devices via the network 115. The communication I/F 114 manages the interface between the network 115 and the CPU 101, and controls I/O of the data to/from an external device. The network 115 includes a LAN, a WAN, a public network, a portable telephone network, or the like.

### (Functional Configuration of Map information creating device)

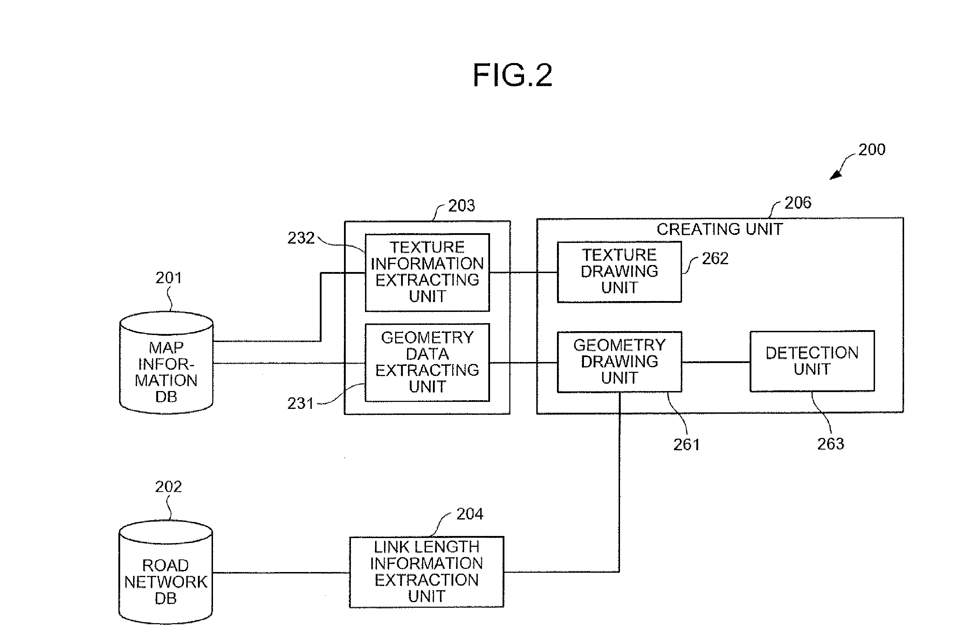

Next, a functional configuration of the map information creating device according to the embodiment of the present invention will be described. Fig. 2 is a block diagram of the functional configuration of the map information creating device according to the embodiment of the present invention. In Fig. 2, a map information creating device 200 includes a map information database 201, a road network database 202, a map information extracting unit 203 (a geometry data extracting unit 231 and a texture information extracting unit 232), a link-length information extracting unit 204, and a creating unit 206.

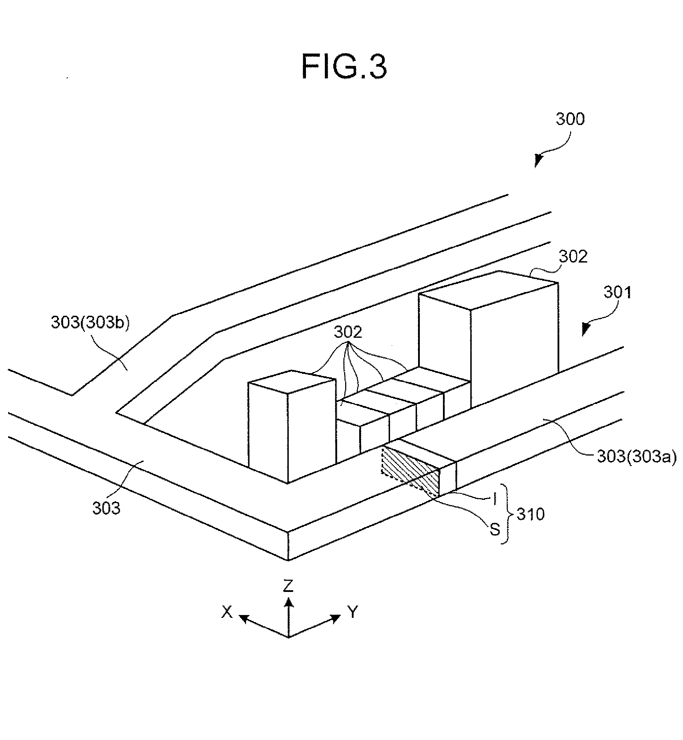

The map information database 201 stores the map information. The map information stored in the map information database 201 is explained specifically. Fig. 3 is an explanatory diagram illustrating a part of the map information stored in the map information database 201. In Fig. 3, map information 300 illustrates the state where it is drawn by the graphics processor illustrated in Fig. 1 for the explanation purpose. The map information 300 uses a coordinate system configured by an X-axis, a Y-axis perpendicular to the X-axis, and a Z-axis perpendicular to an XY plane formed by the X-axis and the Y-axis. This XY plane is a reference plane representing a ground surface, for example. The Z-axis represents height with respect to the reference plane.

The map information 300 includes a ground surface object 301 representing the ground surface, a ground surface structure object 302 representing a ground surface structure such as a building or the like on the ground surface, and a 3D road object 303 representing a road which is constructed on the ground surface and being elevated. The 3D road object 303 constitutes a 3D geometry by line segments of road width, height, and length of a road. The 3D road object 303 is not limited to the road specifically but may be applied to any structure as long as it constitutes the 3D geometry, the length direction thereof is linear, and a texture drawn is uniform. For example, it includes a tunnel, a median strip, and a road-crossing portion of a footbridge.

Specifically, these objects 301 to 303 can be expressed using the coordinate system described above. For example, each peak of the objects 301 to 303 can be specified by a coordinate of the coordinate system. The line segment between the peaks, such as the road width, the height, the length of the road, can also be specified by the coordinate of the coordinate system. Additionally, the texture depending on the objects 301 to 303 concerned is drawn on the objects 301 to 303, and a drawing position of the texture can also be specified by the coordinate of the coordinate system described above. Drawing cycle information of the texture repeatedly drawn on the respective objects 301 to 303 is stored as well. Since other specific contents of the map information 300 are well known, the description thereof is omitted here.

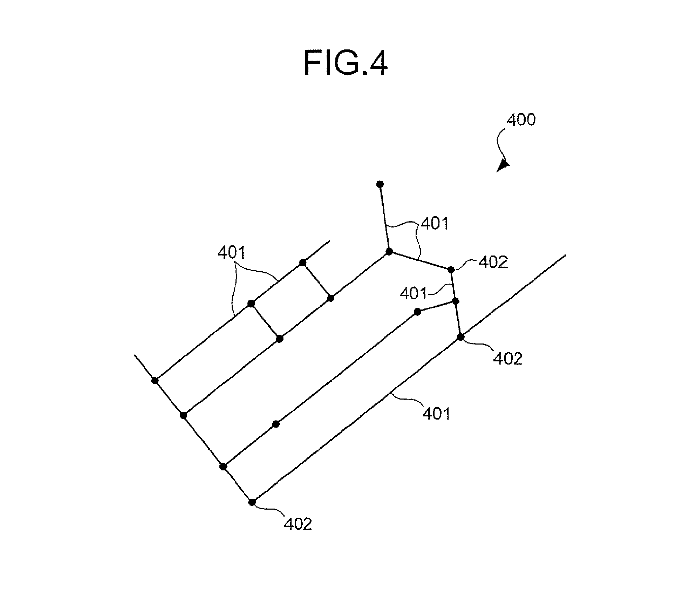

The road network database 202 shown in Fig. 2 stores road network data. The road network data stored in the road network database 202 will be explained. Fig. 4 is an explanatory diagram illustrating a part of the road network data stored in the road network database 202. As shown in Fig. 4, road network data 400 includes a set of links 401 connected by a plurality of nodes 402. The coordinate system described above is also used in the road network data 400. Each node 402 has the coordinate expressed by the coordinate system.

The geometry data extracting unit 231 extracts an ID for identifying the 3D road object 303 illustrated in Fig. 3 and the geometry data containing a cross-section formed by at least the road width and the height. For example, as for a road object 303a illustrated in Fig. 3, the ID representing the road object 303a and geometry data 310 in a cube shape formed by a cross-section S and predetermined length 1 in the length direction of the road are extracted. Although the geometry data extracted here is the geometry data 310 in a cube shape, it is sufficient if it contains at least the cross-section S.

The link-length information extracting unit 204 extracts link length information from the road network data 400. Specifically, a node coordinate information group of each link 401 and a 3D road object ID assigned to each link 401 are extracted. Note that the same 3D road object 303 may be assigned to the plurality of links 401.

The texture information extracting unit 232 extracts texture information constituted by the texture drawn on the surface of the 3D road object 303, drawing cycle information of the texture, and information on a representative color of said arbitrary surface from the 3D road object 303. For example, in the 3D road object 303, a road surface texture is extracted in which a road surface and a lane, such as a center line ruled on the road surface, are drawn on the top surface.

Since the road extends linearly in general, the road surface texture is drawn repeatedly in the length direction of the 3D road object 303. Accordingly, the amount of data can be reduced by extracting this repeating cycle (drawing cycle). The texture information may be drawn on the side surface or the undersurface as well. Additionally, the information extracted by the texture information extracting unit 232 includes the information on the representative color of the surface. This is used when the drawing is carried out using a single color instead of the texture or a combination of the color and the texture.

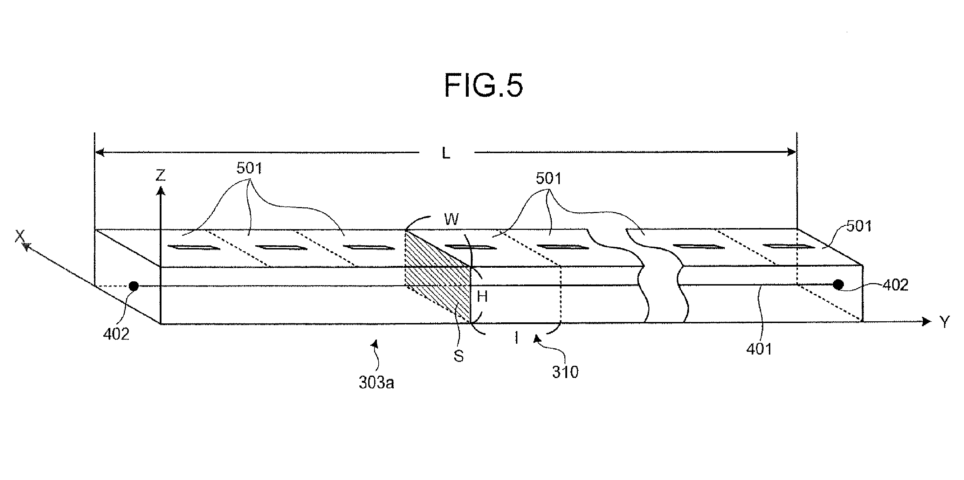

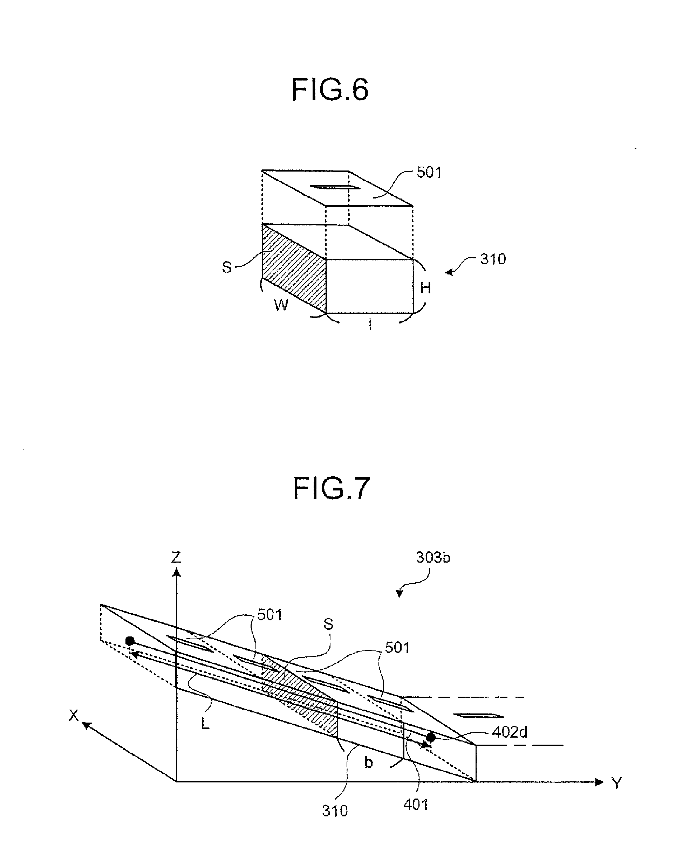

An extraction example of the 3D road object 303 using the map information extracting unit 203 and the link-length information extracting unit 204 will be explained. Fig. 5 is an explanatory diagram illustrating the 3D road object targeted for extraction illustrated in Fig. 2, and Fig. 6 is an explanatory diagram illustrating the extracted geometry data. This 3D road object represents the 3D road object 303a illustrated in Fig. 3. The 3D road object 303a shown in Fig. 5 is an object having road width W, height H, and length L. The 3D road object 303a corresponds to the link 401. On the top surface of the 3D road object 303a, a road surface texture 501 is drawn repeatedly.

As shown in Fig. 5, the geometry data 310 in a cube shape containing the cross-section S formed by the road width W and the height H can be extracted. The length 1 of this geometry data 310 can be set to the length of one sheet (one cycle) of the road surface texture 501 in the length direction of the 3D road object 303a, for example. The road surface texture 501 for one sheet as well as drawing cycle information P (P=L/1) can also be extracted. Moreover, the link length information (length L of the link 401, a node coordinate group, and the 3D road object ID) can be extracted from the link 401.

Fig. 7 is an explanatory diagram illustrating the 3D road object that inclines with respect to the XY plane representing the reference plane. This 3D road object represents the 3D road object 303b illustrated in Fig. 3. By utilizing the information obtained by the map information extracting unit 203 and the link-length information extracting unit 204 shown in Fig. 2, a general-purpose 3D object can be shared. Thus, the amount of data of the map information stored in the map information database 201 can be reduced.

The creating unit 206 is provided with a geometry drawing unit 261, a texture drawing unit 262, and a detection unit 263. The geometry drawing unit 261 generates the 3D object with the same geometry as that of the 3D road object 303 by drawing the geometry data 310 extracted by the geometry data extracting unit 231 so as to appear as being extended in the direction perpendicular to the cross-section S. This drawing processing by extension can be performed using the peak coordinates of the cross-section S. The length to extend is determined based on the link length information, for example. The direction to extend may be the direction that inclines by a vertical interval between the node coordinates of the link length information as illustrated in Fig. 7, instead of the direction perpendicular to the cross-section S of the geometry data 310.

The texture drawing unit 262 generates the 3D object having the same geometry and texture as those of the 3D road object 303 based on the texture information extracted by the texture information extracting unit 232. Specifically, the extracted texture is drawn on the surface of the 3D road object 303 by the amount of the drawing cycle information P. For example, in the case of the road surface texture 501 illustrated in Fig. 5, the road surface texture 501 can be drawn repeatedly on the surface corresponding to the road surface of the 3D road object 303 along the direction perpendicular to the cross-section S of the geometry data 310 by the amount of the drawing cycle information P.

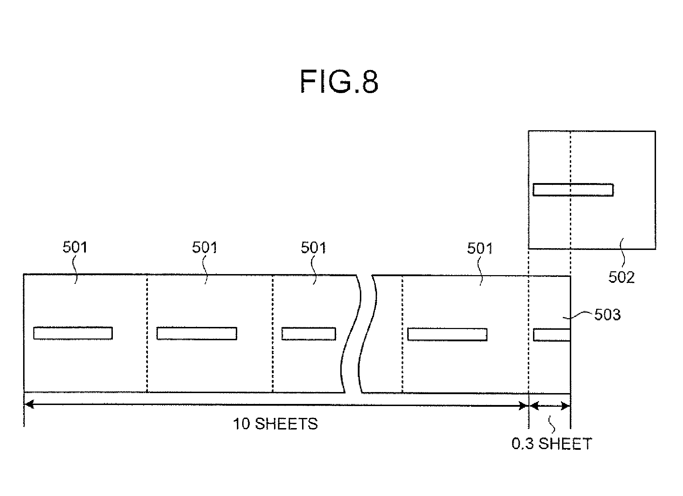

When the drawing cycle information P is "10.3", for example, that contains a fractional part "0.3" after the decimal point besides an integral value "10", the texture for the number of sheets of the integral value as well as that for the length corresponding to the fractional part is drawn. Fig. 8 is an explanatory diagram illustrating an example of the road surface texture 501 drawn by the texture drawing unit 262. In Fig. 8, ten sheets of the road surface texture 501 are drawn. For example, when the drawing cycle information P is "10.3", a part of a road surface texture 503 for the length of 0.3 sheet of the eleventh sheet of the texture 502 is clipped and drawn.
The texture of the length corresponding to the fractional part may be drawn by a method where the texture pattern of the outermost portion in the tenth sheet is drawn in the entire 0.3 sheet exceeding 10.

The detection unit 263 detects whether first end face geometry data representing an end face of one 3D object generated by the creating unit 206 intersects with second end face geometry data representing an end face of the 3D object other than the one 3D object. Specifically, the detection unit 263 detects whether the end faces intersect with each other by determining whether the peak coordinates of the first end face geometry data and the peak coordinates of the second end face data coincide with each other.

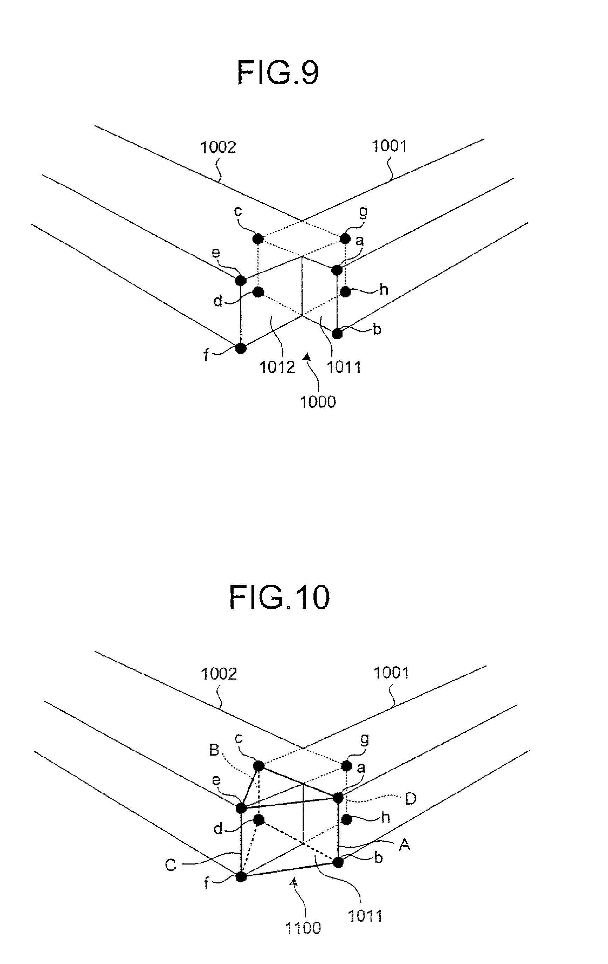

Fig. 9 is an explanatory diagram illustrating a connecting state of the 3D objects. As shown in Fig. 9, first end face geometry data 1011 representing the end face of one 3D object 1001 intersects with second end face geometry data 1012 representing the end face of the 3D object 1002 other than the one 3D object 1001.

The detection unit 263 compares the coordinate of a peak a of the first end face geometry data 1011 with the coordinate of a peak e of the second end face geometry data 1012. The detection unit 263 also compares the coordinate of a peak b of the first end face geometry data 1011 with the coordinate of a peak f of the end face geometry data 1012. The detection unit 263 then compares the coordinate of a peak c of the first end face geometry data 1011 with the coordinate of a peak g of the end face geometry data 1012.

The detection unit 263 then compares the coordinate of a peak d of the first end face geometry data 1011 with the coordinate of a peak h of the second end face geometry data 1012. When all of them coincide with each other, the first end face geometry data 1011 of the one 3D object 1001 and the second end face geometry data 1012 of the other 3D object 1002 are drawn so that they are in plane contact with each other, resulting in that the both 3D objects 1001 and 1002 are connected without a gap.

Meanwhile, when any of them does not coincide with each other, a gap 1000 is generated between the 3D objects 1001 and 1002 connected by the end face geometry data 1011 of the one 3D object 1001 and the end face geometry data 1012 of the other 3D object 1002 intersecting with each other, as illustrated in Fig. 9. In other words, the detection unit 263 detects whether the gap 1000 is generated between the connected 3D objects 1001 and 1002.

The geometry drawing unit 261 then generates, based on a detection result detected by the detection unit 263, a complementary 3D object which complements between the one 3D object 1001 and the other 3D object 1002 using the first and second end face geometry data 1011 and 1012. Fig. 10 is an explanatory diagram illustrating the generated complementary object.

As for the generation of a complementary 3D object 1100, two edges A and B in the height direction of the first end face geometry data 1011 are first extracted. Meanwhile, from two edges C and D in the height direction of the second end face geometry data 1012, the edge C that does not overlap the one 3D object 1001 is extracted. The peaks a and b of the edge A are then extended to the peaks e and f of the edge C while the peaks c and d of the edge B are extended to the peaks e and f of the edge C, thereby drawing the complementary 3D object 1100 in the shape of a triangular prism.

Note that the map information database 201 and the road network database 202 described above specifically achieve their functions using the recording medium such as the ROM 102, the RAM 103, the HD 105, and the CD/DVD 107 illustrated in Fig. 1, for example. Additionally, the map information extracting unit 203, the link-length information extracting unit 204, and the creating unit 206 specifically achieve their functions by causing the CPU 101 or the graphics processor 120 to execute the program recorded in the recording medium such as the ROM 102, the RAM 103, the HD 105, and the CD/DVD 107 illustrated in Fig. 1, for example, or using the input I/F 111.

### First Embodiment

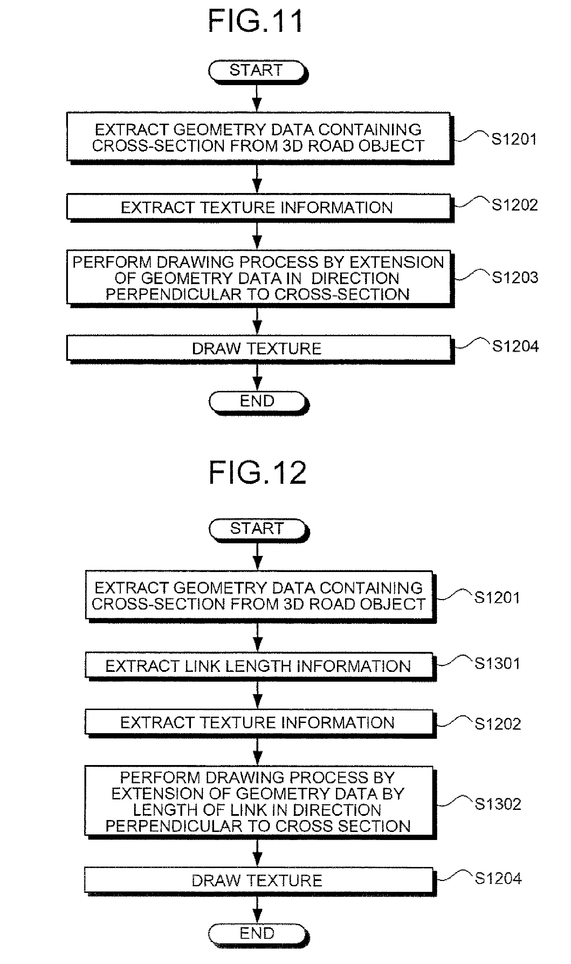

Next, a map information creating process according to a first embodiment will be explained. Fig. 11 is a flowchart of a map information creating process according to the first embodiment. As shown in Fig. 11, the geometry data extracting unit 231 extracts the geometry data 310 containing the cross-section S from the 3D road object 303 in the map information database 201 (step S1201). The texture information extracting unit 232 then extracts the texture information configured by the road surface texture 501 and the drawing cycle information P from this 3D road object 303 (step S1202).

The geometry drawing unit 261 then draws the geometry data 310 so as to appear as being extended in the direction perpendicular to the cross-section S of the extracted geometry data 310 (step S1203). Thereafter, the texture drawing unit 262 draws the road surface texture 501 by the amount of the drawing cycle information P on the surface of the 3D object generated by extension with the same geometry as that of the 3D road object 303 (step S1204).

According to this first embodiment, by extending the geometry data 310, the 3D object that has the same geometry and the same road surface texture 501 as that of the 3D road object 303 stored in the map information database 201 can be generated with the small amount of data.

### Second Embodiment

Next, a map information creating process according to a second embodiment will be explained. Fig. 12 is a flowchart of the map information creating process according to the second embodiment. In Fig. 12, the same step numbers are given to the same steps as those illustrated in Fig. 11, and the description thereof is omitted.

As shown in Fig. 12, after step S1201, the link length information (length L of the link) of the link 401, corresponding to the 3D road object 303 from which the geometry data 310 has been extracted by the geometry data extracting unit 231, is extracted from the road network database 202 (step S1301). After step S1202, the geometry data 310 is drawn based on the link length information so as to appear as being extended in the direction perpendicular to the cross-section S of the geometry data 310 by the length L of the link 401 (step S1302). Then, the procedure proceeds to step S1204.

According to the second embodiment, since the 3D object with the same geometry as that of the 3D road object 303 can be generated by extending the geometry data 310 by the length L of the link 401, the 3D object can be generated that corresponds to the road network data 400 illustrated in Fig. 4. Moreover, if the road is bent two dimensionally such as in the case of a curve, the 3D road object 303 stored in the map information database 201 can be reproduced by extending each of the plurality of links 401 connected by the nodes 402 in the length direction of the links 401 concerned.

### Third Embodiment

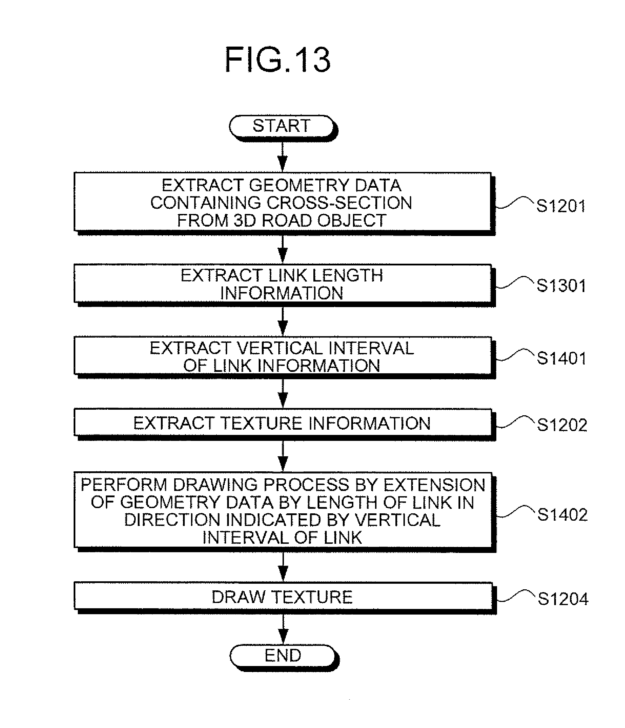

Next, a map information creating process according to a third embodiment will be explained. Fig. 13 is a flowchart of the map information creating process according to the third embodiment. In Fig. 13, the same step numbers are given to the same steps as those illustrated in Figs. 11 and 12, and the description thereof is omitted.

As shown in Fig. 13, after step S1301, vertical interval information representing the direction of the link 401, specifically the vertical interval from the coordinates of the nodes 402 on the both ends of the link 401, is extracted from the road network database 202 (step S1401). After step S1202, the geometry data 310 is drawn so as to appear as being extended in the direction of the link 401 represented by the vertical interval information by the length L of the link 401 represented by the link length information (step S1402). Then, the process proceeds to step S1204.

According to the third embodiment, by extending the geometry data 310 along the direction indicated by the vertical interval of the link 401, the connected section of the 3D objects, such as a slope with gradient, can be drawn without the gap 1000, enabling the object with the geometry adapted to the actual road surface being generated.

### Fourth Embodiment

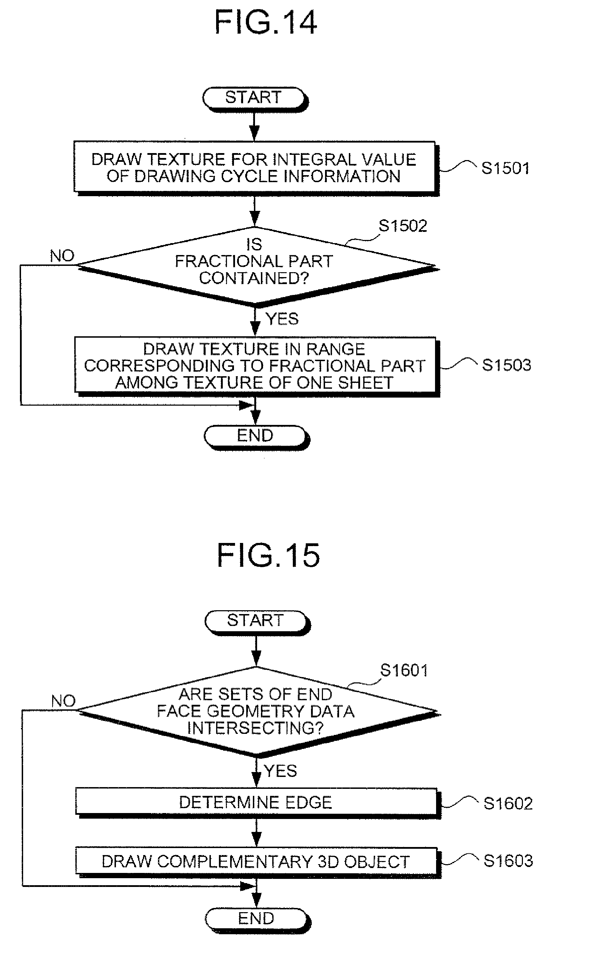

Next, a texture drawing process according to a fourth embodiment will be explained. Fig. 14 is a flowchart of the texture drawing process according to the fourth embodiment. This texture drawing process corresponds to a flowchart of an example of the processing of step S1204 illustrated in Figs. 11 through 13.

As shown in Fig. 14, the texture extracted by the texture information extracting unit 232 is first drawn for the integral value of the drawing cycle information P of the texture (step S1501). For example, if the drawing cycle information P is "10.3", the integral value of "10" sheets are drawn. It is then determined whether the value after the decimal point, i.e., the fractional part, is contained in the drawing cycle information P (step S1502). When the fractional part is not contained (step S1502: NO), i.e., the fractional part is "0", the process is ended. In this case, the road surface texture 501 is drawn from one end to the other in the length direction of the 3D object that is the geometry data 310 extended by the geometry drawing unit 261.

On the other hand, if the fractional part is contained (step S1502: YES), the texture drawing unit 262 draws the texture in the range corresponding to the decimal value of the drawing cycle information P on the object generated by the geometry drawing unit 261 (step S1503). Specifically, as illustrated in Fig. 8, the texture in the range corresponding to the fractional part, i.e., a part of the texture 503 for 0.3 sheet, of the eleventh road surface texture 502 is clipped and drawn.

According to this fourth embodiment, the texture corresponding to the decimal value can be drawn with the value of the decimal value (fractional part) of the drawing cycle information P.

### Fifth Embodiment

Next, a complement processing according to a fifth embodiment will be explained. Fig. 15 is a flowchart illustrating a complement process according to the fifth embodiment. In Fig. 15, the detection unit 263 first detects whether sets of the end face geometry data 1011 and 1012 of the connected 3D objects 1001 and 1002 intersect with each other (step S1601). When the sets of the end face geometry data 1011 and 1012 do not intersect (step S1601: NO), the processing is ended.

In contrast, if the sets of the end face geometry data 1011 and 1012 intersect (step S1601: YES), the edges A through C for drawing the complementary 3D object 1100 are determined (step S1602). Specifically, two edges A and B in the height direction of the end face geometry data 1011 of one of the connected 3D objects 1001 are extracted. Additionally, from two edges C and D in the height direction of the end face geometry data 1012 of the other 3D object 1002, the edge C that does not overlap the one 3D object 1001 is extracted. Thus, the edges A through C for drawing the complementary 3D object 1100 are determined.

The complementary 3D object 1100 is then drawn using the determined edges A through C (step S1603).
Specifically, the peaks a and b of the edge A are drawn as they are seen extended to the peaks e and f of the edge C while the peaks c and d of the edge B are drawn as they are seen extended to the peaks e and f of the edge C, thereby the complementary 3D object 1100 in the shape of the triangular prism can be drawn.

According to this fifth embodiment, the connected section of the 3D objects, such as the curve, can be drawn without the gap 1000, enabling the object with the geometry adapted to the actual road surface being generated.

As described above, according to the map information creating device, the map information creating method, and the map information creating program according to the embodiments of the present invention, the realistic 3D map information 300 can be generated with the small amount of data. Moreover, according to the present invention, it is not necessary to use a large-capacity memory, enabling to employ the inexpensive memory with small capacity.

Particularly, since the map information 300 within the range seen from input viewpoint coordinates is extracted when being also applied to an on-vehicle or portable navigation apparatus, the required virtual 3D road object can be displayed three-dimensionally only when required for display. Moreover, since the general-purpose 3D object can be shared, reduction in the amount of data of the map information 300 can be achieved.

Furthermore, since the realistic 3D map information 300 is reproducible, a user can recognize intuitively that the map information 300 currently displayed on a display screen is the scenery actually viewed with the naked eye. Thereby, the user would not be puzzled by the inconsistency of the map information 300 currently displayed and the scenery currently viewed, and thus the user can drive safely.

The map information creating method described in the embodiments can be realized by executing the program prepared in advance by a computer, such as a personal computer, a workstation, and a built-in device. This program is recorded on the computer-readable recording medium, such as a hard disk, a flexible disk, a CD, a DVD, an MO, a memory card, a RAM, and a ROM and is executed by being read out from the recording medium by the computer. Additionally, this program may be a transmission medium that can be distributed via the network such as the Internet.

## Claims

1. A map information creating device comprising:
a geometry data extracting unit that extracts geometry data from map information including a three-dimensional object indicating three-dimensional geometry configured by width, height, and length, the geometry data including a cross-section constituted of at least the width and the height of the three-dimensional object; and
a creating unit that creates a three-dimensional object having geometry identical to that of the three-dimensional object based on the geometry data extracted by the geometry data extracting unit.

2. The map information creating device according to claim 1, further comprising a length information extracting unit that extracts information on length of the three-dimensional object from data including information on the length, wherein
the creating unit creates the three-dimensional object having geometry identical to that of the three-dimensional object further based on the information on length extracted by the length information extracting unit.

3. The map information creating device according to claim 1 or 2, further comprising a link-length information extracting unit that extracts, from network data of a road to which a plurality of links are connected, link length information on length of a link as the information on length, wherein
the creating unit creates the three-dimensional object having geometry identical to that of the three-dimensional object further based on the link length information extracted by the link-length information extracting unit.

4. The map information creating device according to claim 1 or 2, further comprising a link-direction information extracting unit that extracts, from the network data of a road to which a plurality of links are connected, link direction information on direction of a link, wherein
the creating unit creates the three-dimensional object having geometry identical to that of the three-dimensional object further based on the link direction information extracted by the link-direction information extracting unit.

5. The map information creating device according to claim 1 or 2, further comprising a texture information extracting unit that extracts texture information including a texture drawn on an arbitrary surface of the three-dimensional object, drawing cycle information on a drawing cycle of the texture, and information on a representative color of the arbitrary surface from the three-dimensional object in the map information, wherein
the creating unit creates the three-dimensional object having geometry and texture identical to those of the three-dimensional object in the map information based on the texture information extracted by the texture information extracting unit.

6. The map information creating device according to claim 1 or 2, wherein
the creating unit includes a detecting unit that detects whether a first end-face-geometry data representing an end face of one of the three-dimensional object created by the creating unit and a second end-face-geometry data representing an end face of another third-dimensional object other than the one of the three-dimensional object intersect with each other, and
the creating unit creates a complementary three-dimensional object that complements between the one of the three-dimensional object and the other of the three-dimensional object by carrying out drawing such that peaks of the first end-face-geometry data and the second end-face-geometry data are extended, based on a result of detection by the detecting unit.

7. A map information creating method comprising:
a geometry data extracting step of extracting geometry data from map information including a three-dimensional object indicating three-dimensional geometry configured by width, height, and length, the geometry data including a cross-section constituted of at least the width and the height of the three-dimensional object; and
a creating step of creating a same geometry object having geometry identical to that of the three-dimensional object based on the geometry data extracted at the geometry data extraction step.

8. A map information creating program causing a computer to execute the map information creating method according to claim 7.
